(19) **Europäisches Patentamt**
**European Patent Office**
**Office européen des brevets**

(11) **EP 3 069 899 B1**

(12) **EUROPEAN PATENT SPECIFICATION**

(45) Date of publication and mention
of the grant of the patent:
**17.01.2018 Bulletin 2018/03**

(51) Int Cl.:
**B60C 3/04** *(2006.01)* **B60C 11/03** *(2006.01)*

(21) Application number: **16158366.1**

(22) Date of filing: **03.03.2016**

(54) **PNEUMATIC TIRE**

LUFTREIFEN

PNEUMATIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **18.03.2015 JP 2015054636**

(43) Date of publication of application:
**21.09.2016 Bulletin 2016/38**

(73) Proprietor: **Sumitomo Rubber Industries, Ltd.
Hyogo-ken (JP)**

(72) Inventors:
• **ASANO, Kazuo
Kobe-shi,, Hyogo 651-0072 (JP)**
• **KUBOTA, Yasuhiro
Kobe-shi,, Hyogo 651-0072 (JP)**
• **KAJITA, Hiroaki
Kobe-shi,, Hyogo 651-0072 (JP)**

(74) Representative: **Manitz Finsterwald Patentanwälte
PartmbB
Martin-Greif-Strasse 1
80336 München (DE)**

(56) References cited:
**EP-A1- 2 724 871    EP-A1- 2 738 015
EP-A1- 2 738 016    WO-A1-2014/132551**

• **Michelin: "MICHELIN X", laventuremichelin.com,
1 January 1950 (1950-01-01), pages 1-2,
XP055171753, Retrieved from the Internet:
URL:http://www.laventuremichelin.com/scola
ires_et_enseignants/DOCS/radial_small.jpg
[retrieved on 2015-02-24]**
• **Longstone Tyres: "Citroen 2cv | Longstone
Tyres", longstonetyres.co.uk, 24 February 2015
(2015-02-24), XP055171748, Retrieved from the
Internet:
URL:http://www.longstonetyres.co.uk/page/c
itroen-2cv [retrieved on 2015-02-24]**

**EP 3 069 899 B1**

Printed by Jouve, 75001 PARIS (FR)

**Description**

**Technical Field**

The present invention relates to a pneumatic tire capable of improving fuel consumption performance while ensuring wet performance as well as steering stability.

**Background Art**

As a factor of fuel economy in tires, rolling resistance of tires and air resistance is known. The major cause of rolling resistance of tires is energy loss due to repeated deformation of rubber during traveling. In order to reduce the rolling resistance, it has been proposed to use a tread rubber having low energy loss (low tan $\delta$).

When the tread rubber having low energy loss is used, although the rolling resistance decreases, grip performance, in particular wet grip performance, however, is lowered, and there is another problem that the abrasion resistance deteriorates. As shown in Japanese Unexamined Patent Application Publication Nos. 2004-010781 and 2004-002622, studies of the tread rubber composition having a reduced rolling resistance while improving wear resistance has been developed. Unfortunately, only improvement depending on rubber composition gives insufficient effect. Thus, another approach to improve rolling resistance in terms of other than improvement of rubber composition is strongly demanded.

In view of these circumstances, the present inventors who had conducted studies were able to find the following. When a tire section width is decreased while maintaining its tire outer diameter, the tread width is also decreased accordingly. Thus, the volume of the tread rubber is reduced. As a result, the energy loss caused by the tread rubber is reduced, and the weight of the tire is also lowered. Furthermore, when viewing a vehicle from its front, a tire exposed area appearing downwardly from a bumper edge of the vehicle is reduced according to the reduced tire section width. This makes it possible to reduce the air resistance of the tire.

Furthermore, when a bead diameter is enlarged while maintaining its tire outer diameter, a sidewall region which tends to deform largely during traveling becomes narrow. As a result, a reduction in energy loss in the sidewall region as well as the weight of the tire can be achieved.

Consequently, it has been confirmed that a narrow width and large bead diameter tire in which the tire section width is reduced while enlarging the bead diameter has significantly improved fuel consumption performance through reduction of energy loss in the tread portion and the sidewall portion, reduction of tire mass, and reduction of air resistance.

Unfortunately, as a result of further study of the inventors of the present invention, in the above-mentioned narrow width and large bead diameter tire, steering stability tends to lower according to a narrow tire section width.

WO 2014/132551 A1 and EP 2 738 015 A1 each disclose a pneumatic tire in accordance with the preamble of claim 1.

Longstone Tyres, "Citroen 2cv | Longstone Tyres", longstonetyres.co.uk, (20150224), URL: http://www.longstonetyres.co.uk/page/citroen-2cv, (20150224) discloses the tire sizes of the vintage MICHELIN X tire, while Michelin, "MICHELIN X", laventuremichelin.com, (19500101), pages 1 - 2, URL: http://www.laventuremichelin.com/scolaires et enseignants/DOCS/radial small.jpg, shows the tread pattern of the MICHELIN X tire, which includes four circumferentially extending ribs.

**Summary of Invention**

**Technical Problem**

The present invention has an object to provide a pneumatic tire, in particular, a narrow-width and large bead diameter tire capable of improving fuel consumption performance while ensuring wet performance as well as steering stability by basically employing a tread pattern including three rib-shaped land portions and a land ratio of not less than 85%.

**Solution to Problem**

According to the present invention, a pneumatic tire comprises a carcass extending between bead cores of bead portions through a tread portion and a pair of sidewall portions. A tire section width Wt (unit: mm) in relation to a bead diameter Db (unit: inch) satisfies the following equations (1) and (2):

$$\text{Wt} \leq -0.7257 \times (\text{Db})^2 + 42.763 \times \text{Db} - 339.67 \qquad \cdots (1),$$

$$Wt \geq -0.7257 \times (Db)^2 + 48.568 \times Db - 552.33 \qquad \cdots (2).$$

The tread portion comprises a tread pattern comprising three rib-shaped land portions separated by two longitudinal grooves, and a land ratio of the tread pattern is not less than 85%.

In accordance with the invention, the tread portion comprises a tread rubber comprising a loss modulus E" of not more than 0.06 kg/mm$^2$ and a loss compliance Ls of not more than 0.28 mm$^2$/kg.

In another aspect of the invention, the three rib-shaped land portions may comprise an outboard shoulder land portion having an axial width WSo, an inboard shoulder land portion having an axial width WSi and a central land portion having an axial width WC arranged therebetween, a ratio WSo/WC of the axial width WSo of the outboard shoulder land portion to the axial width WC of the central land portion may be in a range of from 0.95 to 1.32, and a ratio WSi/WC of the axial width WSi of the inboard shoulder land portion to the axial width WC of the central land portion may be in a range of from 1.35 to 1.60.

As used herein, the loss modulus E" and the loss compliance Ls are values measured using a viscoelastic spectrometer according to provision of JIS-K 6394 under a condition of initial strain of 10%, amplitude of 2%, frequency of 10 Hz, a tensile strain mode and temperature of 30 degrees C.

## Advantageous Effects of Invention

The pneumatic tire according to the present invention is configured as a tire having a narrow width and a large bead diameter satisfying the above mentioned equations (1) and (2). Therefore reduction of energy loss in the tread portion and the sidewall portion, reduction of tire weight, and reduction of air resistance may be achieved, thereby improving fuel consumption. While, since the tire having a narrow width and a large bead diameter has a narrow tread width, the steering stability may be deteriorated.

In the present invention, the tread portion employs the tread pattern including three rib-shaped land portions and the land ratio of not less than 85%.

The tire having a narrow width and a large bead diameter may deliver better draining performance as compared with conventional tires due to its narrow tread width. Thus, the tire according to the invention may employ a high land ratio, i.e., the land ratio of not less than 85%, while ensuring wet grip performance on the same levels with conventional tires. Furthermore, the tread pattern consisting of three rib-shaped land portions may have a higher lateral rigidity than the tread pattern consisting of four rib-shaped land portions, when they have the same tread width.

Accordingly, the tire according to the present invention may increase cornering force while ensuring wet grip performance on the same levels with conventional tires and offering low fuel consumption, by employing the tread pattern having three rib-shaped land portions and a land ratio of not less than 85%. That is, the tire in accordance with the present invention may offer an excellent low fuel consumption performance while ensuring the wet performance as well as the steering stability.

## Brief Description of Drawings

FIG. 1 is a cross sectional view of a pneumatic tire according to the present embodiment of the invention.
FIG. 2 is a graph showing the relationship between a tire section width and a bead diameter of tires based on JATMA.
FIG. 3 is a graph showing the relationship between a tire section width and a tire outer diameter of tires based on JATMA.
FIG. 4 is a conceptual diagram for explaining the effect of enlarged tire diameter.
FIG. 5 is a development view of an example of a tread pattern.
FIG. 6 is a graph showing the relationship among a land ratio, lateral pattern rigidity and cornering power index (Cp/W).
FIG. 7 is a graph showing the relationship among a land ratio, lateral pattern rigidity and wet grip performance.
FIG. 8 is a graph showing the relationship among a land ratio, longitudinal pattern rigidity and low rolling resistance index.
FIG. 9 is a cross-sectional view of an example of a measurement device for measuring lateral and longitudinal rigidity of tire.
FIG. 10 is a stress-strain curve of a rubber.
FIG. 11 is a development view of a tread pattern in accordance with another embodiment of the invention.

**Description of Embodiments**

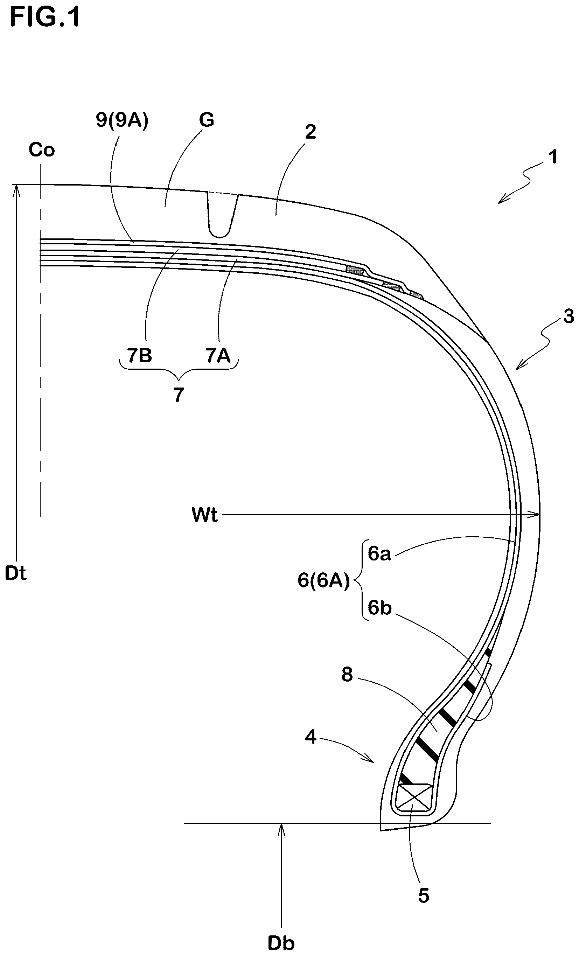

Hereinafter, an embodiment of the present invention will be described in detail in conjunction with accompanying drawings. As illustrated in FIG. 1, the pneumatic tire 1 in accordance with the present embodiment includes a carcass 6 extending between bead cores 5 of bead portions 4 through a tread portion 2 and a pair of sidewall portions 3. In this embodiment, the tire further includes a belt layer 7 disposed radially outward of the carcass 6 in the tread portion 2, and a reinforcing band layer 9 disposed radially outward of the belt layer 7.

Preferably, the carcass 6 includes one carcass ply 6A of carcass cords oriented as an angle of 75 to 90 degrees with respect to the tire equatorial plane Co. The carcass ply 6A, for example, includes a toroidal main body 6a extending between the bead cores 5 and a pair of turn-up portions 6b each turned up around each bead core 5 from the axially inside to the outside of the tire. In each bead portion, a radially tapering bead apex rubber 8 which extends from the bead core 5 is disposed between the main portion 6a and the turn-up portions 6b.

The belt layer 7, for example, includes two belt plies 7A and 7B of belt cords oriented at an angle of from 10 to 35 degrees with respect to the tire equatorial plane Co. The belt plies 7A and 7B are overlapped one another so that belt cords of each ply intersect. The tread portion 2 may be enhanced by hoop effect of the belt layer 7 having high stiffness.

The band layer 9A, for example, includes a spiral band ply 9A of a band cord formed by being wound spirally at an angle of not more than 5 degrees with respect to the tire equatorial plane Co. The band layer 9 covers the substantially entire belt layer so as to restrain the movement of the belt layer 7. Accordingly, growth of the tire outer diameter during high speed traveling, in particular growth of shoulder portion can be prevented. In this embodiment, the band layer 9 is configured to have an axial width greater than that of the belt layer 7.

The pneumatic tire 1 is configured as a narrow width and a large bead diameter tire in which the tire section width Wt (unit: mm) in relation to the bead diameter Db (unit: inch) satisfies the following equations (1) and (2),

$$Wt \leq -0.7257 \times (Db)^2 + 42.763 \times Db - 339.67 \qquad \cdots (1),$$

$$Wt \geq -0.7257 \times (Db)^2 + 48.568 \times Db - 552.33 \qquad \cdots (2).$$

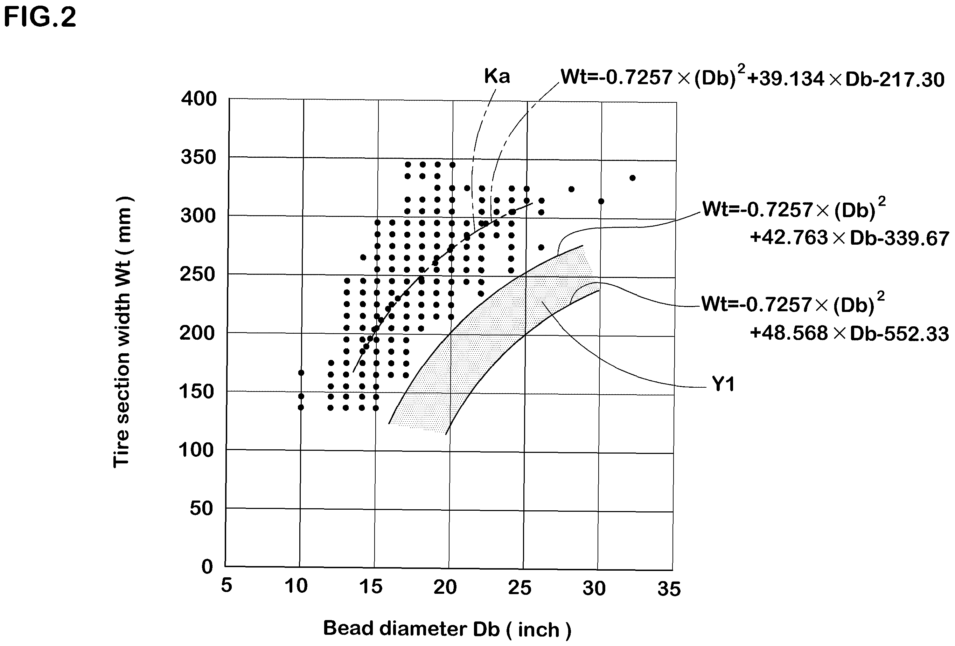

FIG. 2 is a graph showing the relationship between the tire section width Wt and the bead diameter Db of tires based on JATMA. From this study result, the average relationship between the tire section width and the bead diameter of the conventional tires based on JATM, as indicated by one-dot chain line Ka in the Figure, it can be identified by the following equation (A):

$$Wt = -0.7257 \times (Db)^2 + 39.134 \times Db - 217.30 \qquad \cdots (A).$$

In contrast, the region Y1 that satisfies the equations (1) and (2) is outside the scope of the conventional tires shown in the plots. Furthermore, the region Y1 exists on the location where the relationship Ka identified by the equation (A) is moved parallel to a direction to decrease the tire section width Wt as well as to enlarge the bead diameter Db. That is, the tire satisfying the equations (1) and (2) is configured so as to have a narrow tire section width Wt and an enlarged bead diameter Db as compared with conventional tires having the same tire outer diameter.

Such a tire with a narrow tire section width may provide a narrow tread width which offers less tread rubber volume accordingly. Therefore energy loss due to the tread rubber is relatively less, and the tire mass is also reduced. Furthermore, when a vehicle is viewed from its front, a tire exposed area appearing downwardly from a bumper edge is reduced according to the reduced tire section width. This makes it possible to reduce the air resistance of the tire.

Furthermore, since the tire has an enlarged bead diameter as compared with conventional tires having the same tire outer diameter, a sidewall region, which tends to deform largely during traveling, becomes narrow. As a result, a reduction in energy loss by the sidewall portion 3 as well as the weight of the tire can be achieved.

Accordingly, the tire having a narrow width and a large bead diameter may improve the fuel efficiency through a reduction in energy loss by the tread portion 2 and the sidewall portions 3, a reduction in tire mass, and the reduction of air resistance.

When the tire section width Wt does not satisfy the equation (1), improvement of the fuel efficiency is insufficient owing to insufficient improvement reducing the section width or enlarging the bead diameter. When the tire does not satisfy the equation (2), the tire tends to have excessively narrow width. Such a tire may be necessary to be inflated with a high internal pressure in order to ensure use of under the load capacity. In this situation, ride comfort and road noise performance may be deteriorated.

In order to further improve the fuel efficiency, the pneumatic tire 1 has a tire outer diameter Dt (Unit: mm) satisfying the following equations (3) and (4):

$$Dt \leq 59.078 \times Wt^{0.498} \qquad \cdots (3),$$

and

$$Dt \geq 59.078 \times Wt^{0.467} \qquad \cdots (4).$$

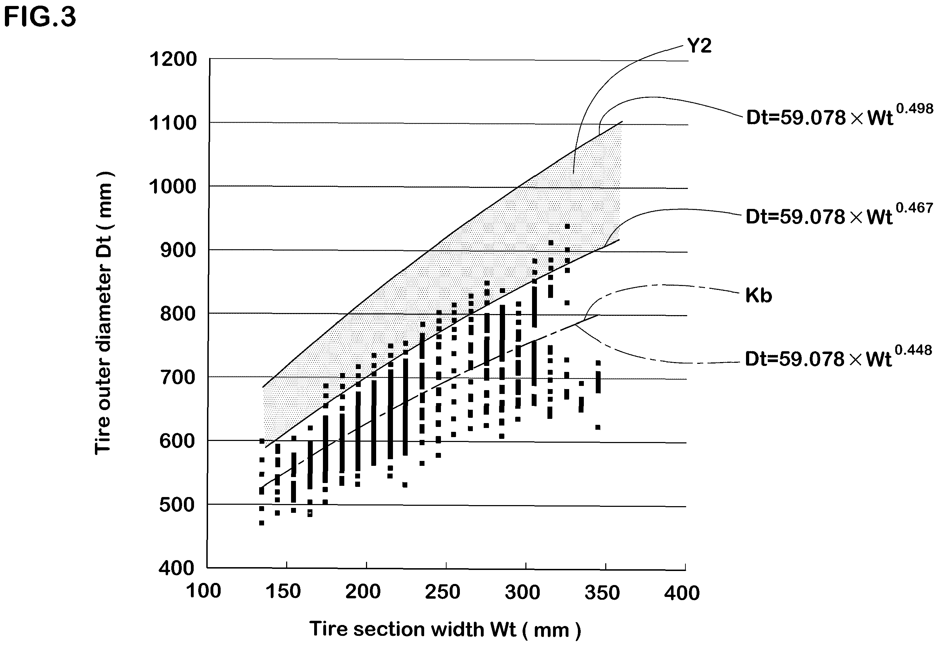

FIG. 3 illustrates a graph showing the relationship between tire section widths Wt and tire outer diameters Dt of tires based on JATMA. From the study result, the average relationship between tire section widths Wt and tire outer diameters Dt of the conventional tire based on JATMA, as indicated by one-dot chain line Kb in the Figure, can be identified by the following equation (B):

$$Dt = 59.078 \times Wt^{0.448} \qquad \cdots (B).$$

In contrast, the region Y2 that satisfies the equations (3) and (4) exists on the location where the relationship Kb identified by the equation (B) is moved parallel to a direction to enlarge the tire outer diameter Dt. That is, the tire satisfying the equations (3) and (4) has a narrow width, a large bead diameter and a large tire outer diameter Dt.

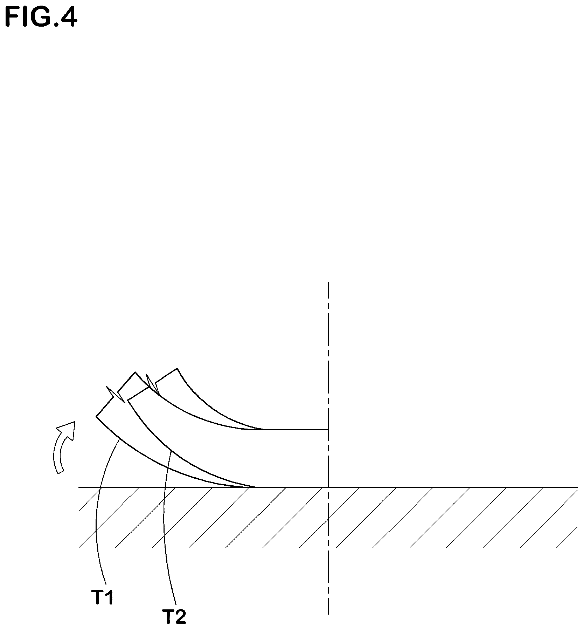

The tire T1 with a relatively large outer diameter Dt, as conceptually shown in FIG. 4, is small in amount of bending deformation of the ground contacting portion in the circumferential direction of the tire as compared with the tire T2 with a relatively small outer diameter. Accordingly, the tire is small in energy loss and has advantageous effect of low rolling resistance. Therefore, when the tire does not satisfy the equation (4), low rolling resistance may not be expected. On the other hand, when the tire does not satisfy the equation (3), it may be necessary to be inflated with a high internal pressure to ensure necessary load capacity, and therefore ride comfort and road noise performance may be deteriorated.

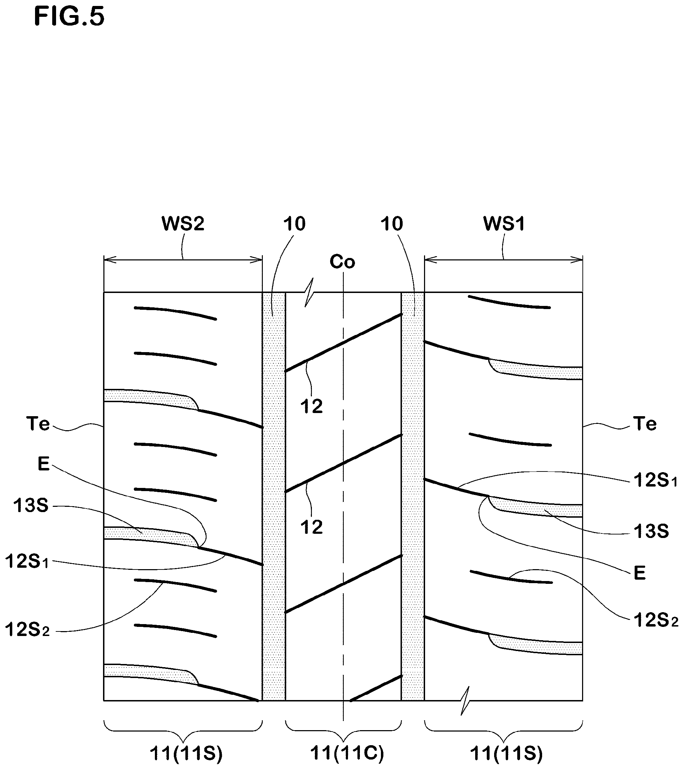

As illustrated in FIG. 5, the tread portion 2 of the pneumatic tire 1 includes a tread pattern consisting of three rib-shaped land portions 11 separated by two longitudinal grooves 10. The three rib-shaped land portions 11 include a central land portion 11C disposed between the main grooves 10 and 10, and a pair of shoulder land portions 11S each disposed axially outward of each main groove 10. In this embodiment, the main grooves 10 and 10 are arranged on both sides of the tire equator C in a symmetrical manner. Accordingly, the axial width WS1 of one of the shoulder land portions 11S is the same as the axial width WS2 of the other one of the shoulder land portions 11S, for example.

The tread portion 2 is provided with only two main grooves 10 as a circumferentially and continuously extending groove which includes a sipe having a width of not more than 0.5 mm so as to close the width when coming into contact with the ground. Each rib-shaped land portion 11 is not provided with a lateral groove that extends across perfectly the land portion 11 to form a plurality of blocks. However, it is allowed to provide a sipe that extends across perfectly the land portion 11. Accordingly, each rib-shaped land portion 11 is formed as a rib that extends substantially continuously in the circumferential direction of the tire.

In this embodiment, the central land portion 11C is provided with a plurality of central sipes 12C extending across the central land portion 11C. Each shoulder land portion 11S is provided with a plurality of lug grooves 13S each extending axially inwardly from the tread edge Te and having an axially inner end E terminating within the shoulder land portion 11S and a plurality of first sipes $12S_1$ each extending from each inner end E of each lug groove 13S, and at least one second sipe $12S_2$ arranged between a pair of circumferentially adjacent lug grooves 13S. In this embodiment, each second shoulder sipe $12S_2$ has at least one end, preferably both ends that terminate within the shoulder land portion 11S.

The tread pattern has a land ratio in a range of not less than 85% by adjusting widths of the main grooves 10 and lengths, widths and the number of the lug grooves 13S, for example. Here, the land ratio is defined as a ratio Mb/Ma of a total area Mb of ground contact surface of the land portions to a tread gross surface area Ma obtained by adding the total ground contact surface of the land portions to the total area of the grooves.

The tire having a narrow width and a large bead diameter may deliver better draining performance as compared with conventional tires due to its narrow tread width. Thus, the tire according to the present embodiment may employ a high land ratio, i.e., the land ratio of not less than 85%, while ensuring wet grip performance on the same levels with conventional tires.

Furthermore, the tread pattern consisting of three rib-shaped land portions 11 (hereinafter, it may be referred to as a "three-rib pattern P3") may have a higher lateral rigidity and generate a larger cornering force than the tread pattern consisting of four rib-shaped land portions 11 (hereinafter, it may be referred to as a four-rib pattern P4), when they have the same specification including the tread width except for tread pattern only.

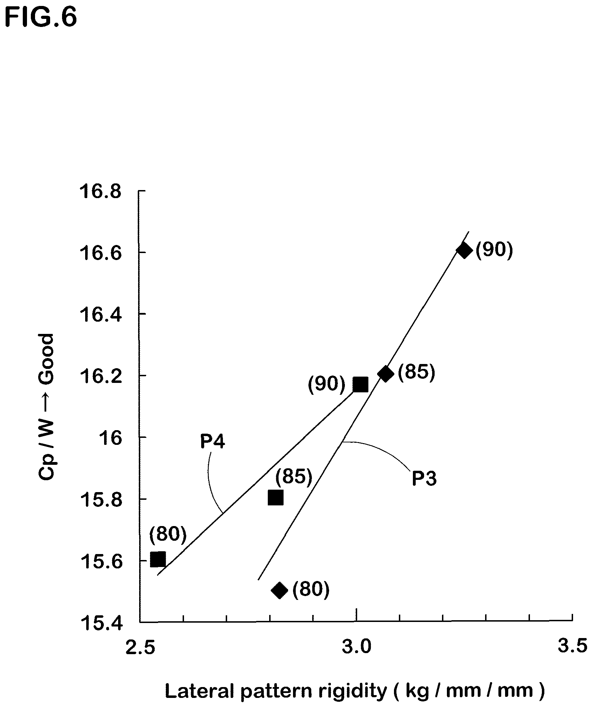

FIG. 6 illustrates a graph showing the relationship among a land ratio, lateral pattern rigidity and cornering power index (Cp/W) of the respective three-rib pattern P3 and the four-rib tread pattern P4. In the graph, the numerals in parentheses indicate the land ratio. The cornering power index (Cp/W) is a dimensionless value obtained by dividing the cornering power (Cp) by the load (W). As illustrated in FIG. 6, when the land ratio is the same, it has been confirmed that the three-rib pattern P3 exhibits high lateral pattern rigidity and generates a large cornering power index (Cp/W), as compared with the four-rib pattern P4. In particular, when the land ratio is not less than 85%, it is understood that the three-rib pattern P3 exhibits an excellent steering stability where the cornering power index (Cp/W) is equal to or more than 16.

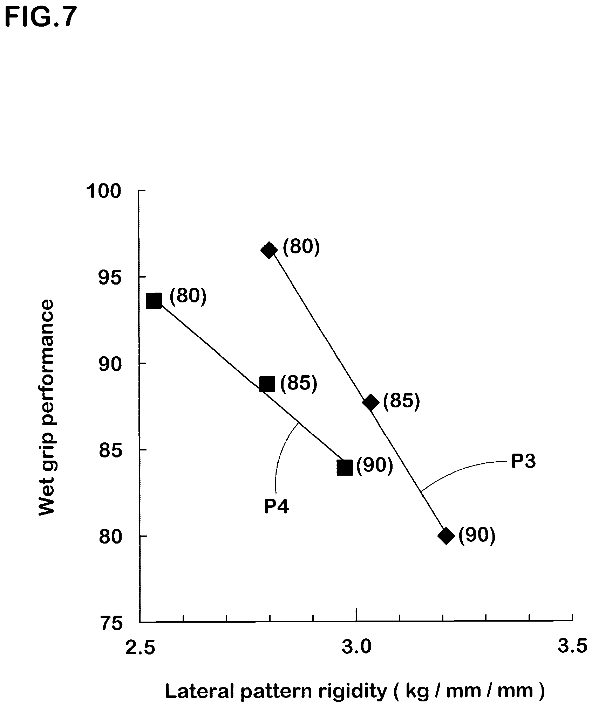

FIG. 7 is a graph showing the relationship among a land ratio, lateral pattern rigidity and wet grip performance of the respective three-rib pattern P3 and the four-rib tread pattern P4. In the graph, the numerals in parentheses indicate the land ratio. As illustrated in FIG.7, when the land ratio is the same, it has been confirmed that there is no difference in wet grip performance between the three-rib pattern P3 and the four-rib pattern P4, and a sufficient wet grip performance can be obtained due to a narrow tread width even when the land ratio is set not less than 85%. In the graph of FIG. 7, the wet grip performance is evaluated using a speed in which a hydroplaning phenomenon occurs.

Preferably, the tread pattern has lateral pattern rigidity per a circumferential unit length of 1 mm in a range of from 2.8 to 3.2 kg/mm/mm. When the lateral pattern rigidity is less than 2.8 kg/mm/mm, it may be difficult to offer an excellent steering stability due to lack of cornering power index (Cp/W). On the other hand, when the lateral pattern rigidity is more than 3.2 kg/mm/mm, it may be difficult to offer an excellent wet grip performance since the drainage performance tends to deteriorate by difficulty of maintaining a necessary groove area. In view of wet grip performance, the land ratio is preferably set not more than 90%.

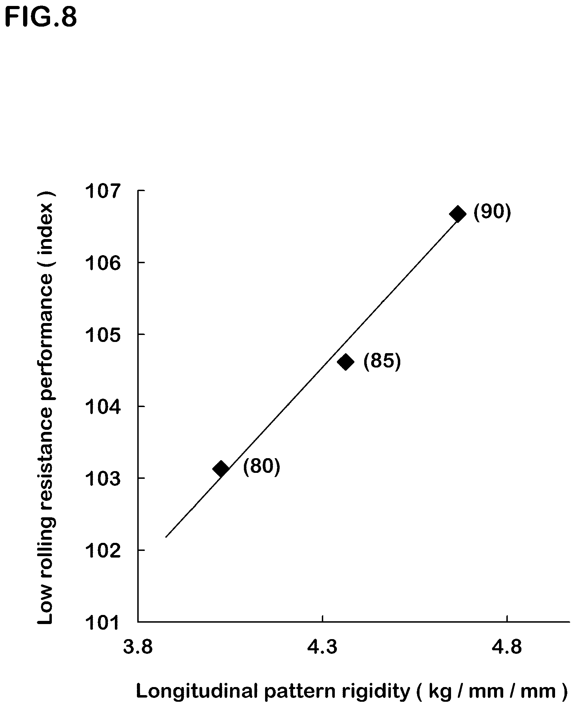

Preferably, the tread pattern has longitudinal pattern rigidity per a circumferential unit length of 1 mm in a range of not less than 4.1 kg/mm/mm. FIG. 8 is a graph showing the relationship among a land ratio, longitudinal pattern rigidity and low rolling resistance index of the three-rib pattern P3 obtained through inventor's experiments. In the graph, the numerals in parentheses indicate the land ratio. As illustrated in FIG. 8, it has been confirmed that the low rolling resistance performance improves according to increase of the longitudinal pattern rigidity. When the land ratio tends to be high, the temperature of the tread rubber may rise since heat dissipation property of the tread portion tends to be lower. On the other hand, hysteresis loss of rubber tends to be lower according to temperature rise of the rubber. That is, a tire having a high land ratio (high pattern rigidity) exhibits a low rolling resistance, since the hysteresis loss of the rubber is lowered according to temperature rise of the rubber due to heat storage. Furthermore, since the tire according to the embodiment includes a narrow width and a large bead diameter, the behavior of the tread is influenced by the longitudinal pattern rigidity more than the lateral pattern rigidity. Accordingly, in order to enhance pattern rigidity of the tread portion, it may be possible to improve low rolling performance of the tire. Furthermore, the longitudinal pattern rigidity is less than 4.1 kg/mm/mm, it may be difficult to maintain low rolling resistance performance.

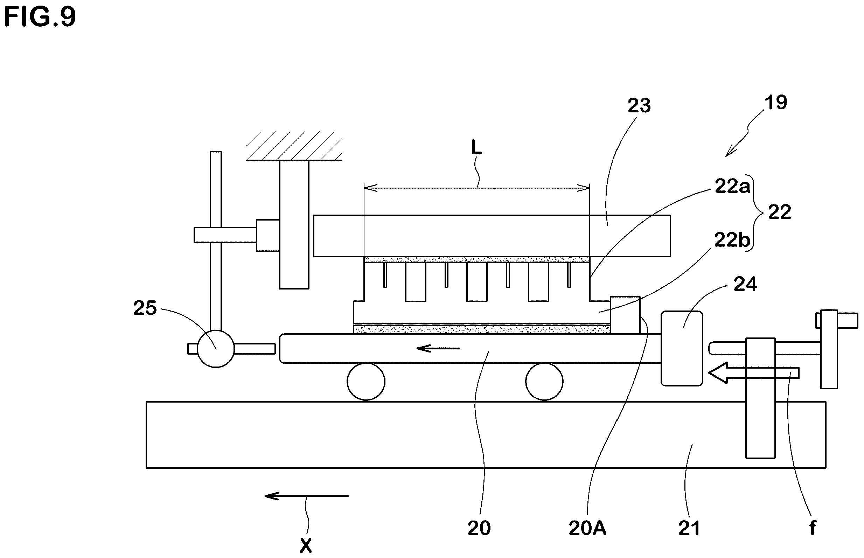

The lateral pattern rigidity and the longitudinal pattern rigidity of the tread pattern may be measured using a measurement device 19 as illustrated in FIG. 9. The device 19 includes a base 21, a mount table 20 on which a measurement sample piece 22 of a tread pattern is mounted and which can move on the base 21 in the x-direction, a fixing plate 23 for fixing the sample piece toward the mount table 20, a load sensor (e.g. load cell) 24 for measuring a load acting on the mount table 20 in the x-direction, and a distance sensor 25 for measuring a moving distance of the mount table in the x-direction.

The measurement sample 22 is prepared from the tread rubber G cut out from the pneumatic tire 1. Alternatively, the measurement sample 22 can be prepared from a replica G of the tread rubber G if it has the same size, pattern and rubber composition as the tread rubber G. The measurement sample 22 is firmly fixed to the mount table 20 using an adhesive agent so that the samples 22 and the mount table 20 can move together. Furthermore, the base tread portion 22b of the measurement sample 22 is fixed by a stopper piece 20A on the mount table 20 so that the base portion 22b cannot deform. In addition, the ground contact surface of the measurement sample 22 may be fixed to the fixing plate 23 using an adhesive agent so as to prevent slippage therebetween. In an embodiment to use the measurement device 19, the displacement t in the X-direction of the mount table 20 is measured under the condition where the mount table 20 receives a vertical force F0 through the measurement sample and a lateral force f in the X-direction. The vertical force F0 (kgf), for example, may be defined as follows:

$$F0 = 2.5 \times Rs,$$

where "Rs" is an area ($mm^2$) of a ground contact surface of the measurement sample 22.

When the longitudinal pattern rigidity is measured, the measurement sample 22 is mounted on the mount table 20 so that the circumferential direction of the sample is along the X-direction of the measurement device 19. Then, the longitudinal pattern rigidity of the tread portion is defined, in relation to the sample length L, the lateral force f and the displacement t of the mount table 20, as follows:

$$\text{Longitudinal pattern rigidity} = (f \, / \, t) \, / \, L \text{ (Unit: kg/mm/mm).}$$

When the lateral pattern rigidity is measured, the measurement sample 22 is mounted on the mount table 20 so that the circumferential direction of the sample is perpendicular to the X-direction of the measurement device 19. Then, the lateral pattern rigidity of the tread portion is defined, in relation to the sample length L, the lateral force f and the displacement t of the mount table 20, as follows:

$$\text{Lateral pattern rigidity} = (f \, / \, t) \, / \, L \text{ (Unit: kg/mm/mm).}$$

Furthermore, the pneumatic tire 1 preferably includes the tread rubber G having a loss modulus E" of not more than 0.06 kg/mm$^2$ and a loss compliance Ls of not more than 0.28 mm$^2$/kg. Note that the loss modulus E" and the loss compliance Ls of the tread rubber are defined as values of the radially outermost ground contact layer when the tread rubber G is formed of a plurality of rubber layers.

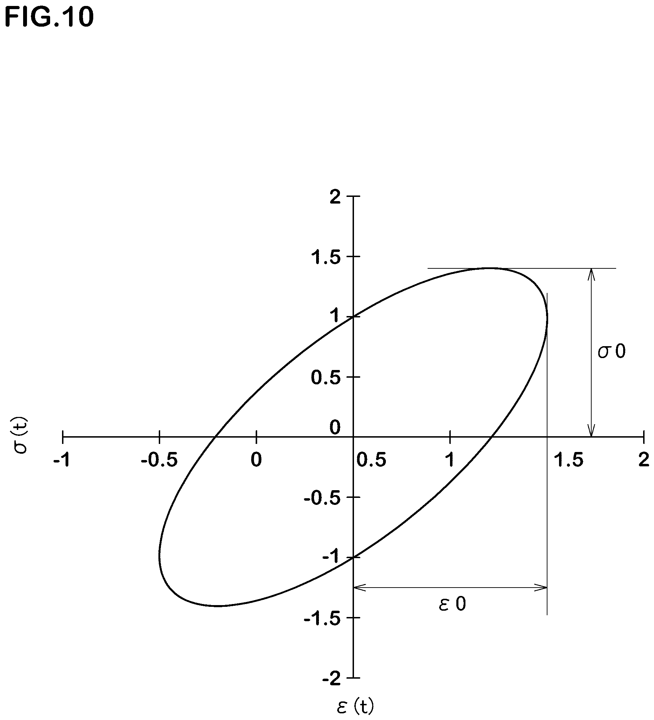

FIG. 10 illustrates a stress-strain curve of a rubber under forced vibration. Here, the hysteresis loss Q is expressed by (A) and (B):

$$Q = \pi \times E" \times \varepsilon 0^2 \qquad (A),$$

and

$$Q = \pi \times Lc \times \sigma 0^2 \qquad (B).$$

The hysteresis loss Q depends on the loss modulus E" when the strain $\varepsilon 0$ is constant. Accordingly, it is possible to reduce the rolling resistance of the tire by lowering the loss modulus E" of the tread rubber. Furthermore, the hysteresis loss Q depends on the loss compliance Ls when the stress $\sigma 0$ is constant. Accordingly, it is possible to reduce the rolling resistance of the tire by lowering the loss compliance Lc of the tread rubber.

The present inventors have found that a strain-constant behavior of the tread portion is mainly caused by a bending deformation, and a stress-constant behavior of the tread portion is mainly caused by a compressive deformation. Meanwhile, in the tire having a narrow width and a large bead diameter according to the embodiment, a large bending deformation of the tread portion may be caused owing to its narrow tread width and its long ground contact patch. Thus, the hysteresis loss Q of the tread rubber can be reduced effectively by lowering the loss modulus E" of the tread rubber. Furthermore, since the tire having a narrow width and a large bead diameter according to the embodiment tends to exhibit low load index as compared with conventional tires, the tire may be used with a high internal pressure in order to ensure a required load index. Thus, the hysteresis loss Q of the tread rubber can also be reduced effectively by lowering the loss compliance Lc of the tread rubber.

As described above, the tire having a narrow width and a large bead diameter may offer low rolling resistance by lowering the hysteresis loss Q of the tread rubber based on the tread rubber with the loss modulus E" of not more than 0.06 kg/mm$^2$ and the loss compliance Lc of not more than 0.28 mm$^2$/kg. When the loss modulus E" is less than 0.04kg/mm$^2$ or the loss compliance Lc is less than 0.20mm$^2$/kg, the wet grip performance may be deteriorated since the storage modulus E' tends to increase. Preferably, the loss modulus E" is not less than 0.04 kg/mm$^2$, and preferably the loss compliance Lc is not less than 0.20kg/mm$^2$.

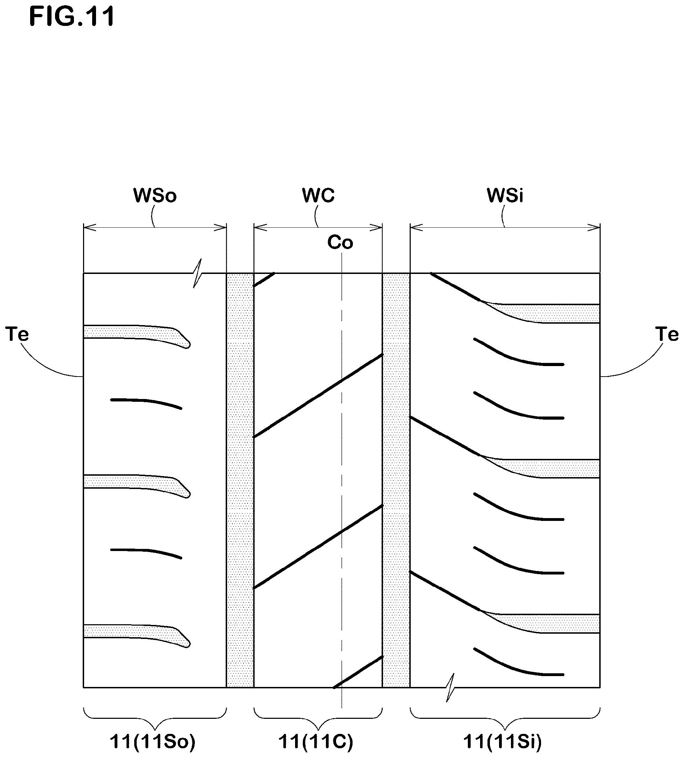

FIG. 11 illustrates a development view of the tread pattern in accordance with another embodiment of the invention. In general, a tire used for a rear wheel of a passenger vehicle is subjected to a low load condition where about 40% of the standard load is acted. Thus, the cornering power generated from such a rear tire would be small. Furthermore, a tire used for a rear wheel tends to be installed to the vehicle with negative camber. Accordingly, a tire for rear wheels preferably includes a tread pattern including an outboard shoulder land portion $11S_o$ and an inboard shoulder portion $11S_i$ having an axial width greater than that of the outboard shoulder land portion $11S_o$ in order to increase a ground contact area of the inboard shoulder land portion $11S_i$ to improve cornering power.

In this embodiment, the tread pattern includes the outboard shoulder land portion $11S_o$ having an axial width

WS$_o$, the inboard shoulder land portion 11S$_i$ having an axial width WS$_i$ and the central land portion 11C having an axial width WC arranged therebetween. Here, the outboard land portion 11S$_o$ is intended to be positioned towards away from a center of a vehicle body when the tire is installed to the vehicle. The inboard land portion 11S$_i$ is intended to be positioned towards the center of the vehicle body when the tire is installed to the vehicle.

Preferably, a ratio WS$_o$ / WC of the axial width WS$_o$ of the outboard shoulder land portion 11S$_o$ to the axial width WC of the central land portion 11C is set in a range of from 0.95 to 1.32. Preferably, a ratio WS$_i$ / WC of the axial width WS$_i$ of the inboard shoulder land portion 11S$_i$ to the axial width WC of the central land portion 11C is set in a range of from 1.35 to 1.60.

Accordingly, the tire according to the embodiment can improve cornering power by increasing the ground contact area of the inboard shoulder land portion 11S$_i$ when the tire is installed to a vehicle with negative camber. When the ratio WS$_i$ / WC is less than 1.35, or the ratio WS$_o$ / WC is more than 1.32, the cornering power generated from the rear wheel with respect to the cornering power generated from the front wheel tends to be large relatively, thereby being deteriorated steering stability owing to oversteer behavior. On the other hand, when the ratio WS$_i$ / WC is more than 1.6 or the ratio WS$_o$ / WC is less than 0.95, the wet grip performance may be deteriorated since the grooved area of the rear tire is not sufficient.

While the particularly preferable embodiments in accordance with the present invention have been described in detail, the present invention is not limited to the illustrated embodiments, but can be modified and carried out in various aspects.

**Example**

(A) Pneumatic tires having an internal structure shown in FIG. 1 were manufactured based on the specification in Table 1. Then, rolling resistance and air resistance of each test tire was tested. In each tire, the land ratio is set to 100%. Rolling resistance test:

Using a rolling resistance tester, under the following conditions, rolling resistance (unit: N) of each test tire was measured. The test results were shown using an index of the reciprocal of the respective rolling resistance, wherein Sample 1 is set to 100. The larger the value, the lower the rolling resistance is.

Temperature: 20 degrees C.
Load: 4.8 kN
Internal pressure: Listed in Table 1
Rim: Standard rim
Speed: 80 km/h
Alignment

Toe angle: 0 deg.
Camber angle: 0 deg.

Air resistance test:

In a laboratory, a force received from each test tire installed to a vehicle was measured under the condition where the air with a speed corresponding to the vehicle running speed of 100 km/hr was provided toward the test tire exposed from a lower edge of the bumper, wherein the tire exposed height was set to 140 mm. The test results were shown using an index of the reciprocal of the respective forces, wherein Sample 1 is set to 100. The larger the value, the better the air resistance is.

Table 1

|  | Sample 1 | Sample 2 | Sample 3 | Sample 4 |
|---|---|---|---|---|
| Tire section width Wt (mm) | 195 | 165 | 165 | 165 |
| Aspect ratio H (%) | 65 | 65 | 65 | 65 |
| Bead diameter Db (inch) | 15 | 16 | 18 | 19 |
| Load index LI | 91 | 81 | 84 | 85 |

(continued)

|  | Sample 1 | Sample 2 | Sample 3 | Sample 4 |
|---|---|---|---|---|
| Internal pressure (kPa) | 250 | 350 | 320 | 310 |
| Tire load (kN) | 4.82 | 4.82 | 4.82 | 4.82 |
| Rim width (inch) | 6 | 5 | 5 | 5 |
| Tire outer diameter Dt (mm) | 634.5 | 620.9 | 671.7 | 697.1 |
| Satisfying equations (1) and (2) | No | No | Yes | Yes |
| Satisfying equations (3) and (4) | No | No | Yes | Yes |
| Rolling resistance test | 100 | 102 | 103 | 104 |
| Air resistance | 100 | 114 | 114 | 114 |

From the test results, it has been confirmed that the tires of Samples 3 and 4 which satisfy the equations (1) and (2) improve rolling resistance and air resistance.

(B) Pneumatic tires having the three-rib pattern (FIG. 5) and the fourth-rib pattern (not shown) were manufactured based on the tire according to Sample 4. These configurations are shown in Table 2. Then, rolling resistance, steering stability and wet grip performance of each test tire was tested. Regarding each land ratio, it was adjusted by modifying the main groove widths, the lug groove widths, lengths and the number. Regarding rolling resistance test, the same test was conducted. The test results are indicated using an index based on Ref. 1 being 100. The larger the value, the lower the rolling resistance.

Steering stability test:

In a laboratory, cornering power of each test tire was measured under a condition of slip angle of 1 degree, internal pressure of 310 kPa and tire load of 4.82 kN. The test results are indicated using the cornering power index (Cp/W) which is calculated by dividing the cornering power (Cp) by the tire load (W). The tire load was defined as a 70% standard load for front and a 40% standard load for rear. The larger the value, the better the steering stability is.

Wet grip performance test:

In a laboratory, hydroplaning occurring speed of each test tire was measured under a condition of slip angle of 1 degree, internal pressure of 310 kPa and tire load of 4.82 kN.

Table 2

|  | Ref. 1 | Ref. 2 | Ref. 3 | Ref. 4 | Ex. 1 | Ex. 2 | Ex. 3 | Ex. 4 |
|---|---|---|---|---|---|---|---|---|
| Number of ribs in tread portion | 4 | 4 | 4 | 3 | 3 | 3 | 3 | 3 |
| Land ratio (%) | 80 | 85 | 90 | 80 | 85 | 85 | 85 | 90 |
| Longitudinal pattern rigidity (kg/mm/mm) | 4.71 | 5.22 | 5.57 | 4.03 | 4.37 | 4.13 | 3.88 | 4.67 |
| Lateral pattern rigidity (kg/mm/mm) | 2.54 | 2.81 | 3.00 | 2.82 | 3.06 | 3.02 | 2.98 | 3.24 |
| Rolling resistance test | 104.0 | 104.0 | 102.7 | 103.1 | 104.6 | 103.9 | 102.0 | 106.7 |
| Wet grip performance | 94 | 89 | 84 | 97 | 88 | 88 | 91 | 80 |
| Cornering power index (Cp/W) | 15.6 | 15.8 | 16.2 | 15.5 | 16.2 | 16.3 | 16.2 | 16.6 |

As shown in Table 2, it has been confirmed that the tires having the three-rib pattern and a land ratio of not less than 85% may improve fuel consumption performance while ensuring wet performance as well as steering stability. (C) Pneumatic tires having the three-rib pattern (FIG. 5) and the land ratio of 85% were manufactured based on the tire according to Sample 4. These configurations are shown in Table 3. Then, rolling resistance and wet grip performance of each test tire was tested.

Table 3

|  | Ex. 5 | Ex. 6 | Ex. 7 | Ex. 8 | Ex. 9 |
|---|---|---|---|---|---|
| Number of ribs in tread portion | 3 | 3 | 3 | 3 | 3 |
| Land ratio (%) | 85 | 85 | 85 | 85 | 85 |
| Tread rubber loss modulus E" (kg/mm$^2$) | 0.112 | 0.089 | 0.051 | 0.098 | 0.058 |
| Tread rubber loss compliance Lc (mm$^2$/kg) | 0.37 | 0.211 | 0.276 | 0.268 | 0.239 |
| Rolling resistance test | 104 | 111 | 115 | 110 | 117 |
| Wet grip performance | 100 | 93 | 90 | 95 | 90 |

(D) Pneumatic tires having the three-rib pattern (FIG. 5) were manufactured based on the tire according to Sample 4. These configurations are shown in Table 4. Then, rolling resistance, wet grip performance and steering stability of each test tire was tested. Regarding steering stability, the test was conducted in the same manner except setting the negative camber of 1 degree.

Table 4

|  | Ex. 10 | Ex. 11 | Ex. 12 | Ex. 13 | Ex. 14 | Ex. 15 |
|---|---|---|---|---|---|---|
| Tread pattern | 3 | 3 | 3 | 3 | 3 | 3 |
| Land ratio (%) | 85 | 85 | 85 | 85 | 85 | 85 |
| $WS_o$ (mm) | 37 | 26 | 35 | 31 | 27 | 23 |
| WC (mm) | 14 | 31 | 25 | 25 | 25 | 25 |
| $WS_i$ (mm) | 36 | 29 | 29 | 33 | 37 | 41 |
| Ratio $WS_o$ / WC | 2.64 | 0.84 | 1.40 | 1.24 | 1.08 | 0.92 |
| Ratio $WS_i$ / WC | 2.57 | 0.94 | 1.16 | 1.32 | 1.48 | 1.64 |
| Rolling resistance test | 105 | 105 | 105 | 105 | 105 | 105 |
| Wet grip performance | 89 | 87 | 88 | 88 | 88 | 86 |
| Front (Cp/W) | 21.8 | 22.0 | 22.0 | 21.9 | 21.9 | 21.8 |
| Rear (Cp/W) | 23.5 | 23.9 | 23.5 | 23.8 | 24.1 | 24.4 |

**Claims**

1. A pneumatic tire (1) comprising:

   a carcass (6) extending between bead cores (5) of bead portions (4) through a tread portion (2) and a pair of sidewall portions (3);
   a tire section width (Wt) (unit: mm) in relation to a bead diameter (Db) (unit: inch) satisfying the following equations (1) and (2),

   $$Wt \leq -0.7257 \times (Db)^2 + 42.763 \times Db - 339.67 \qquad \cdots (1),$$

   $$Wt \geq -0.7257 \times (Db)^2 + 48.568 \times Db - 552.33 \qquad \cdots (2);$$

   the tread portion (2) comprising a tread pattern comprising three rib-shaped land portions (11) separated by two longitudinal grooves (10); and
   a land ratio of the tread pattern being not less than 85%,

**characterized in that**
the tread portion (2) comprises a tread rubber comprising a loss modulus (E") of not more than 0.06 kg/mm$^2$ and a loss compliance (Ls) of not more than 0.28 mm$^2$/kg.

2. The pneumatic tire (1) according to claim 1,
wherein the three rib-shaped land portions (11) comprise an outboard shoulder land portion ($11S_o$) having an axial width ($WS_o$), an inboard shoulder land portion ($11S_i$) having an axial width ($WS_i$) and a central land portion (11C) having an axial width (WC) arranged therebetween, a ratio ($WS_o$ / WC) of the axial width ($WS_o$) of the outboard shoulder land portion ($11S_o$) to the axial width (WC) of the central land portion (11C) is in a range of from 0.95 to 1.32, and a ratio ($WS_i$ / WC) of the axial width ($WS_i$) of the inboard shoulder land portion ($11S_i$) to the axial width (WC) of the central land portion (11C) is in a range of from 1.35 to 1.60.

**Patentansprüche**

1. Luftreifen (1), umfassend:

eine Karkasse (6), die sich zwischen Wulstkernen (5) von Wulstabschnitten (4) durch einen Laufflächenabschnitt (2) und ein Paar Seitenwandabschnitte (3) erstreckt;
wobei eine Reifenquerschnittsbreite (Wt) (Einheit: mm) in Relation zu einem Wulstdurchmesser (Db) (Einheit: Zoll) die folgenden Gleichungen (1) und (2) erfüllt

$$Wt \leq -0{,}7257 \times (Db)^2 + 42{,}763 \times Db - 339{,}67 \qquad \ldots(1),$$

$$Wt \geq -0{,}7257 \times (Db)^2 + 48{,}568 \times Db - 552{,}33 \qquad \ldots(2);$$

wobei der Laufflächenabschnitt (2) ein Laufflächenprofil umfasst, das drei rippenförmige Landabschnitte (11) umfasst, die durch zwei Längsrillen (10) getrennt sind; und
ein Landverhältnis des Laufflächenprofils nicht kleiner als 85% ist,
**dadurch gekennzeichnet, dass**
der Laufflächenabschnitt (2) einen Laufflächenkautschuk umfasst, der einen Verlustmodul (E") von nicht mehr als 0,06 kg/mm$^2$ und eine Verlustnachgiebigkeit (Ls) von nicht mehr als 0,28 mm$^2$/kg umfasst.

2. Luftreifen (1) nach Anspruch 1, wobei die drei rippenförmigen Landabschnitte (11) einen außenliegenden Schulterlandabschnitt ($11S_o$) mit einer axialen Breite ($WS_o$), einen innenliegenden Schulterlandabschnitt ($11S_i$) mit einer axialen Breite ($WS_i$) und einen zentralen Landabschnitt (11C) mit einer axialen Breite (WC), der dazwischen angeordnet ist, umfasst, wobei ein Verhältnis ($WS_o$ / WC) der axialen Breite ($WS_o$) des außenliegenden Schulterlandabschnitts ($11S_o$) zu der axialen Breite (WC) des zentralen Landabschnitts (11C) in einem Bereich von 0,95 bis 1,32 liegt, und ein Verhältnis ($WS_i$ / WC) der axialen Breite ($WS_i$) des innenliegenden Schulterlandabschnitts ($11S_i$) zu der axialen Breite (WC) des zentralen Landabschnitts (11C) in einem Bereich von 1,35 bis 1,60 liegt.

**Revendications**

1. Bandage pneumatique (1) comprenant :

une carcasse (6) s'étendant entre des âmes de talons (5) de portions formant talons (4) en traversant une portion formant bande de roulement (2) et une paire de portions formant parois latérales (3) ;
une largeur de la section de pneumatique (Wt) (unité : mm) en relation à un diamètre de talon (Db) (unité : pouce) satisfait les équations suivantes (1) et (2)

$$Wt \leq -0{,}7257 \times (Db)^2 + 42{,}763 \times Db - 339{,}67 \qquad (1),$$

$$Wt \geq -0,7257 \text{ x } (Db)^2 + 48,568 \text{ x } Db - 552,33 \qquad (2) \, ;$$

la portion formant bande de roulement (2) comprenant un motif de roulement comprenant trois portions en relief (11) en forme de nervures séparées par deux rainures longitudinales (10) ; et
un rapport de relief du motif de roulement n'est pas inférieur à 85 %,
**caractérisé en ce que**
la portion formant bande de roulement (2) comprend un caoutchouc pour bande de roulement qui présente un module de perte (E") qui ne dépasse pas 0,06 kg/mm$^2$ et une compliance de perte (Ls) qui ne dépasse pas 0,28 mm$^2$/kg.

2. Bandage pneumatique (1) selon la revendication 1,
dans lequel les trois portions en relief (11) en forme de nervures comprennent une portion en relief d'épaulement extérieure (11S$_o$) ayant une largeur axiale (WS$_o$), une portion en relief d'épaulement intérieure (11S$_i$) ayant une largeur axiale (WS$_i$) et une portion en relief centrale (11C) ayant une largeur axiale (WC) agencée entre celles-ci, un rapport (WS$_o$/WC) de la largeur axiale (WS$_o$) de la portion en relief d'épaulement extérieure (11S$_o$) sur la largeur axiale (WC) de la portion en relief centrale (11C) est dans une plage de 0,95 à 1,32, et un rapport (WS/WC) de la largeur axiale (WS$_i$) de la portion en relief d'épaulement intérieure (11S$_i$) sur la largeur axiale (WC) de la portion en relief centrale (11C) est dans une plage de 1,35 à 1,60.

# FIG.1

# FIG.2

EP 3 069 899 B1

## FIG.3

EP 3 069 899 B1

# FIG.4

T1

T2

# FIG.5

## FIG.6

# FIG.7

# FIG.8

FIG.9

# FIG.10

# FIG.11

WSo      WC      WSi

Co

Te      Te

11(11So)      11(11C)      11(11Si)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004010781 A
- JP 2004002622 A
- WO 2014132551 A1
- EP 2738015 A1

**Non-patent literature cited in the description**

- **LONGSTONE TYRES.** Citroen 2cv | Longstone Tyres. *longstonetyres.co.uk,* 24 February 2015, http://www.longstonetyres.co.uk/page/citroen-2cv
- **MICHELIN.** *MICHELIN X,* 01 January 1950, 1-2, http://www.laventuremichelin.com/scolaires et enseignants/DOCS/radial small.jpg